# EUROPEAN PATENT SPECIFICATION

(11) **EP 4 136 694 B1**
(45) Date of publication and mention of the grant of the patent: **27.11.2024**
(21) Application number: 21718133.8
(22) Date of filing: 16.04.2021
(51) Int. Cl.: H01M 8/18

(54) **REDOX FLOW BATTERY WITH IMMISCIBLE ELECTROLYTE AND FLOW THROUGH ELECTRODE**
REDOX-FLOW-BATTERIE MIT NICHT MISCHBAREN ELEKTROLYTEN UND DURCHFLUSSELEKTRODE
BATTERIE À FLUX REDOX AVEC ÉLECTROLYTE IMMISCIBLE ET ÉLECTRODE À TRAVERSER

(30) Priority: 17.04.2020 EP 20382311
(43) Date of publication of application: 22.02.2023
(73) Proprietor: Fundación IMDEA Energía, 28935 Móstoles (Madrid) (ES)
(72) Inventor: MONTES GUTIÉRREZ, Iciar, 28935 Móstoles, Madrid (ES); MARCILLA GARCÍA, Rebeca, 28935 Móstoles, Madrid (ES); PALMA DEL VAL, Jesús, 28935 Móstoles, Madrid (ES); VENTOSA ARBAIZAR, Edgar, 28935 Móstoles, Madrid (ES); VERA COELLO, Marcos, 28911 Leganés, Madrid (ES); SÁNCHEZ SÁNZ, Mario, 28911 Leganés, Madrid (ES); IBÁÑEZ LEÓN, Santiago Enrique, 28935 Móstoles, Madrid (ES)
(74) Representative: ABG Intellectual Property Law, S.L.
(86) International application number: PCT/EP2021/059865
(87) International publication number: WO 2021/209585

(56) References cited:
- WO-A1-2017/151647
- US-A1- 2019 058 205
- US-A1- 2020 099 080

## Description

### TECHNICAL FIELD

The present invention relates to the field of batteries. More specifically, the present invention relates to the field of redox flow batteries.

### BACKGROUND

Due to the increased energy consumption and demand worldwide, renewable power generation, such as from solar and wind is highly attractive, but their intermittent nature is problematic. To compensate for this drawback, the use and development of appropriate energy-storage systems have been heavily pursued. The existing energy storage technologies are classified as mechanical energy storage (pumped hydro, compressed air, liquid air, and flywheels), thermal storage (latent or sensible heat), chemical storage (hydrogen, synthetic fuels), electric storage (superconducting magnets, capacitors), and electrochemical storage (batteries and supercapacitors).

Deemed suitable for large-scale energy storage, redox-flow batteries (RFBs) have been proposed as promising choices for grid-scale storage systems because of the unique advantages they present, such as their flexible, modular design and fast response (Wang et al. Adv Funct Mater, 2013, 23(8):970-986). The name 'redox' refers to electrochemical reduction and oxidation reactions through which energy is stored in electrolytes. A common redox flow battery configuration comprises a first and a second electrode in contact with a first and a second electrolyte comprising redox active species (named anolyte and catholyte). In this redox flow battery configuration, the anolyte and catholyte are usually separated by a separator such as an ion-selective membrane. The separator maintains electrical neutrality during operation and mitigates cross-over or cross-contamination of redox active species between catholyte and anolyte. However, a complete electrolyte separation is not guaranteed. In addition, separators cost about a 30% of the total cost of the battery and their durability is limited. Thus, separators need regular replacement increasing the maintenance costs of the batteries. For example, US2019/058205A1 describes a redox flow battery comprising a negative electrode immersed in a anolyte, a positive electrode immersed in a catholyte, and a cation-permeable separator partitioning the anolyte from the catholyte.

US2020099080A1 describes a redox flow battery that uses a generally stationary separator liquid that separates the anolyte from the catholyte at immiscible liquid-liquid interfaces. WO2017151647 describes a mixture that includes a mediator having a first redox potential, a non-liquid active material having a second redox potential that is less than the first redox potential, and a cation. ES2633601A1 describes a membrane-less redox battery comprising immiscible electrolytes. No separator is needed in said redox battery and the two immiscible electrolytes are separated by an interface. The battery described on ES2633601A1 works in static mode, cannot be completely charged, has a low power density and a low energy density leading to high energy cost during charging mode and to a low energy efficiency. Also, this type of battery has a high probability of suffering from parasitic reactions.

Therefore, despite the above-mentioned systems, it is desirable to develop flow-redox battery alternatives with increased energy density, power density, energy efficiency and overall performance.

### BRIEF DESCRIPTION OF THE INVENTION

The authors of the present invention have designed a redox flow battery based on at least one flow-through electrode and immiscible electrolytes (i.e. liquid electrolytes insoluble in each other, that when put in contact form two phases). The use of the redox battery of the invention has the advantage of a reduced operative and fabrication cost compared to other redox batteries of the state of the art (i.e. no separator between the electrolytes such as polymeric or ceramic membranes is needed). Also, the battery of the present invention has an increased energy density. In addition, the flow-redox battery of the invention is more robust and durable that the batteries of the art. In addition, the battery of the present invention is able to work in dynamic state at high flow rates. In addition, the redox flow battery of the invention having at least one flow-through electrode, has reduced overpotentials than batteries with flow-by electrodes.

Thus, a first aspect of the invention is directed to a redox flow battery (10) comprising:
a) a compartment (1) comprising
   - a positive electrode (2) and a negative electrode (3);
      wherein at least one electrode is a flow-through electrode; preferably a porous flow-through electrode;
   - a catholyte (4) and an anolyte (5);
      wherein the catholyte (4) and the anolyte (5) are immiscible between them; and wherein the catholyte and the anolyte are in contact through a liquid-liquid interface between them; and wherein the liquid-liquid interface between the catholyte and the anolyte consist of the catholyte and the anolyte;
b) at least one reservoir container (6, 7) connected in fluidic communication with the compartment (1) through the at least one flow-through electrode (2, 3); wherein the at least one reservoir container comprises the catholyte (4) and/or the anolyte (5);
wherein the at least one flow-through electrode comprises a longitudinal axis X-X'; and wherein the redox flow battery comprises means for directing the catholyte (4) or the anolyte (5) through the at least one flow-through electrode in a direction perpendicular to the longitudinal axis X-X'.

In a second aspect, the invention is directed to an energy storage and/or delivery system comprising at least one redox flow battery (10) according to the present invention in any of its particular embodiments. In particular, the redox flow battery may act a secondary and/or rechargeable battery, i.e. the redox flow battery may be configured to be reversibly charged and discharged.

In a third aspect, the present invention is directed to a method of storing electricity comprising the steps of:
a) providing a redox flow battery (10) according to the invention;
b) letting flow or pumping the electrolyte
   - from the at least one reservoir container (6, 7) into the compartment (1) through the at least one flow-through electrode; or
   - from the compartment (1) to the at least one reservoir container (6, 7) through the at least one flow-through electrode;
   wherein the electrolyte is the catholyte (4) and/or the anolyte (5); and
c) oxidizing the redox active species of the catholyte at the positive electrode (2) to the corresponding oxidized state, while the redox active species of the anolyte are reduced to the corresponding reduced state at the negative electrode (3); wherein the at least one flow-through electrode comprises a longitudinal axis X-X'; and wherein the electrolyte of step (b) flows in a direction perpendicular to the longitudinal axis X-X'.

In another aspect, the present invention is directed to method of delivering electricity comprising the steps of:
a) providing a redox flow battery according to the invention;
b) letting flow or pumping the electrolyte
   - from the at least one reservoir container (6, 7) to the compartment (1) through the at least one flow-through electrode; or
   - from the compartment (1) to the at least one reservoir container (6, 7) through the at least one flow-through electrode;
   wherein the electrolyte is the catholyte (4) or the anolyte (5); and
c) reducing the redox active species of the catholyte at the positive electrode (2) to their reduced state while the redox active species of the anolyte are oxidized to the corresponding oxidized state at the negative electrode (3);
   wherein the at least one flow-through electrode comprises a longitudinal axis X-X'; and wherein the electrolyte of step (b) flows in a direction perpendicular to the longitudinal axis X-X'.

In yet another aspect of the present invention is directed to the use of the redox flow battery (10) of the present invention to store or deliver electricity.

### FIGURES

Figure 1. Scheme of a redox flow battery according to a particular embodiment of the present invention (battery A).
Figure 2. Scheme of a redox flow battery (battery B).
Figure 3. Scheme of a redox battery according to a particular embodiment of the present invention.
Figure 4. Cyclic voltammetry results of redox active species.
Figure 5. Partition coefficients of redox active species in the immiscible electrolytes.
Figure 6. Representative voltage profiles during charge of a flow-through redox-flow battery (Battery A) when it is charged at 11 mAcm⁻² using different flow rates (B-E).
Figure 7. Representative voltage profile during charge of flow-by battery (Battery B) when it is charged at 11 mAcm⁻² using different flow rates.
Figure 8. Voltage profile during charge of flow-through (battery A) and flow-by (battery B) batteries at the same current density (11 mA cm⁻²) and using the same flow rate (Flow B).
Figure 9. Comparison of the battery voltage during charge in flow-through (battery A) and flow-by (battery B) batteries using different flow rates.
Figure 10. Representative voltage profiles during charge of redox-flow battery A (flow-through) when it is charged at different current densities. The flow rate used is Flow B for 11, 15 and 20 mA cm⁻² and also Flow C for 20 mA cm⁻².
Figure 11. Representative voltage profiles during charge of flow-by battery B when it is charged at different current densities (4.4, 6.6 and 11 mA cm⁻²). The flow rate used is Flow B in all experiments.
Figure 12. Scheme of a redox flow battery according to a particular embodiment of the present invention.

### DETAILED DESCRIPTION OF THE INVENTION

In the context of the present invention, the term "redox" refers to electrochemical reduction and oxidation reactions which help to store energy in a battery during charge and deliver energy during discharge.

The redox flow battery of the invention is configured to act as an energy storage and delivery system. In particular, the redox-flow battery is a secondary or rechargeable battery, i.e. it is configured to be reversibly charged and discharged.

As defined above, a first aspect of the invention is directed to a redox flow battery (10) comprising:
a) a compartment (1) comprising
   - a positive electrode (2) and a negative electrode (3);
      wherein at least one electrode is a flow-through electrode; preferably a porous flow-through electrode;
   - a catholyte (4) and an anolyte (5);
      wherein the catholyte (4) and the anolyte (5) are immiscible between them; and wherein the catholyte and the anolyte are in contact through a liquid-liquid interface between them; and wherein the liquid-liquid interface between the catholyte and the anolyte consist of the catholyte and the anolyte;
b) at least one reservoir container (6, 7) connected in fluidic communication with the compartment (1) through the at least one flow-through electrode (2, 3); wherein the at least one reservoir container comprises the catholyte (4) and/or the anolyte (5) ;
   wherein the at least one flow-through electrode comprises a longitudinal axis X-X'; and wherein the redox flow battery comprises means for directing the catholyte (4) or the anolyte (5) through the at least one flow-through electrode in a direction perpendicular to the longitudinal axis X-X'.

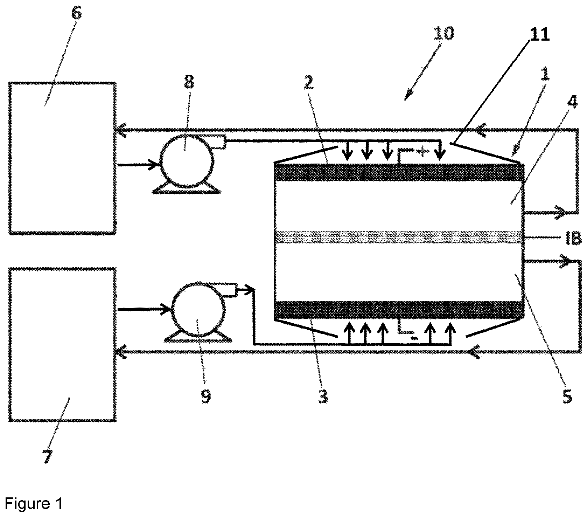

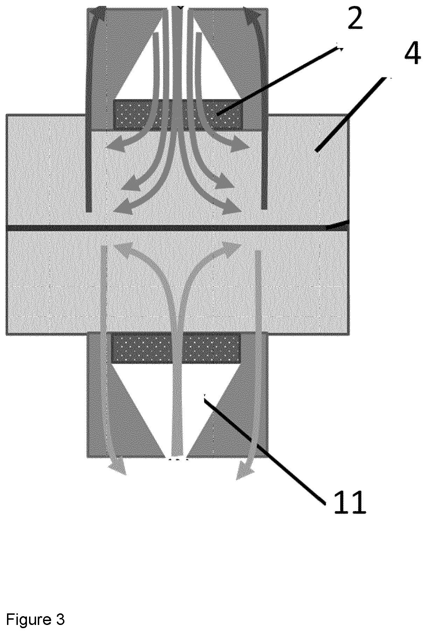

An exemplary and non-limiting embodiment of the redox-flow battery of the invention is illustrated on Figure 1 and on Figure 3.

In an embodiment, the redox-battery of the invention may work in a dynamic or static mode; preferably in a dynamic mode.

In a particular embodiment, the redox-battery of the invention is a redox flow battery. In the context of the present invention, the term "flow battery" is intended to refer to a battery system in which reactants and products are transported into and out of the battery.

In a particular embodiment, the redox battery does not comprise a separator between the catholyte (4) and the anolyte (5), particularly does not comprise a physical separator. In a more particular embodiment, the redox-battery of the invention is a membrane-less redox flow battery.

The catholyte (4) and the anolyte (5) form two immiscible phases. The redox battery does not comprise an additional phase between the catholyte (4) and the anolyte (5).

In a particular embodiment, the battery of the present invention is not a microfluidic battery; particularly is not a microfluidic redox flow battery.

In a more particular embodiment, the battery of the present invention is able to work in transitional or turbulent flow conditions (i.e. not laminar flow conditions). Surprisingly, the authors of the present invention have observed that the battery of the present invention does not need laminar flow conditions to be able to work. In the context of the present invention the expression "laminar flow conditions" is understood as conditions wherein a flow is characterized by fluid particles (i.e. liquid molecules) following smooth paths in layers, with each layer of fluid particles moving smoothly past the adjacent layers with little or no mixing.

### Compartment

As defined above, the compartment (1) comprised in the redox-flow battery of the present invention comprises:
a positive electrode (2) and a negative electrode (3);
wherein at least an electrode is a flow-through electrode; preferably wherein the positive electrode and the negative electrodes are flow-through electrodes; more preferably wherein positive electrode and the negative electrodes are porous flow-through electrodes;
a catholyte (4) and an anolyte (5);
wherein the catholyte (4) and the anolyte (5) are immiscible between them; and wherein the catholyte and the anolyte are in contact through a liquid-liquid interface between them; and wherein the liquid-liquid interface between the catholyte and the anolyte consist of the catholyte and the anolyte.

In particular, the compartment (1) of the redox-flow battery of the present invention does not comprise a separator between the catholyte (4) and the anolyte (5); preferably does not comprise a physical separator such as a membrane or a filter between the catholyte and the anolyte; more preferably does not comprise a membrane such as ion selective membrane or a microporous membrane between the catholyte and the anolyte.

In a particular embodiment, the compartment (1) comprised in the redox-flow battery of the present invention, is a reactor; preferably an electrochemical reactor.

In another particular embodiment, the compartment (1) comprised in the redox-flow battery of the present invention is configured to be modular, replaceable, scalable and/or independent of the rest of the battery components.

In a particular embodiment, the compartment (1) of the redox-flow battery of the present invention comprises at least two openings (i.e. an inlet and an outlet); preferably four openings (i.e. two inlets and two outlets).

In a more particular embodiment, the compartment (1) of the redox-flow battery of the present invention has one inlet and one outlet; wherein one inlet is one flow-through electrode and wherein the electrodes are facing each other.

In a more particular embodiment, the compartment (1) of the redox-flow battery of the present invention has two inlets and two outlets; wherein the two inlets are the two flow-through electrodes and wherein the flow-through electrodes are facing each other.

The compartment (1) is in fluidic communication with at least a reservoir container (6, 7) through the at least one flow-through electrode (2, 3); wherein the at least a reservoir container comprises the catholyte (4) and/or the anolyte (5); particularly wherein the at least one flow-through electrode is an inlet or an outlet.

In an embodiment, the at least one flow-through electrode of the battery of the invention is an inlet or an outlet of the compartment (1).

### Electrolytes

The electrolytes of the present invention are immiscible between them. In particular, the catholyte (4) and the anolyte (5) are immiscible between them (i.e. they are insoluble in each other). Thus, when put in contact, the catholyte (4) and the anolyte (5) form two immiscible phases (i.e. cannot form a homogeneous phase); preferably two immiscible liquid phases. Thus, if the catholyte and the anolyte of the invention are mixed, when the mixture is settled, spontaneous phase separation may occur, forming two immiscible phases (catholyte and anolyte) separated by a liquid-liquid interface; particularly, wherein said liquid-liquid interface is consequence of the immiscibility of the catholyte (4) and the anolyte (5); more particularly, wherein said liquid-liquid interface is formed by the catholyte (4) and the anolyte (5).

In a particular embodiment the compartment (1) of the battery of the invention comprises electrolytes consisting of a catholyte (4) and an anolyte (5) being immiscible between them; particularly the catholyte (4) and the anolyte (5) form two immiscible liquid phases; said two immiscible phases are in contact by a liquid-liquid interface formed between them as consequence of their immiscibility.

In an embodiment, the liquid-liquid interface composition consist of the catholyte and the anolyte; preferably the liquid-liquid interface does not comprise an additional compound or liquid.

In an embodiment, the liquid-liquid interface comprises two opposite sides, one in contact with the anolyte and the opposite one in contact with the catholyte.

In another embodiment, the liquid-liquid interface is not a third liquid, a separator or a membrane.

In the context of the present invention, the term "electrolytes" is referred to both a catholyte (4) and/or an anolyte (5). In addition, the term "electrolyte" are referred to a catholyte (4) or an anolyte (5).

In an embodiment, each of the electrolytes (i.e. anolyte and catholyte) of the invention comprises:
- at least a solvent;
- optionally a salt; and
- redox active species.

In a particular embodiment, the at least a solvent of the electrolytes is an ionic liquid. The ionic liquid may be selected from compounds comprising a cation selected from triazole, sulfonium, oxazolium, pyrazolium, ammonium, pyridinium, pyrimidinium, pyrrolidinium, imidazolium, pyridazinium, piperidinium, phosphonium, and an anion selected from BF⁴⁻, PF⁶⁻, AsF⁶⁻, SbF⁶⁻, AlCl⁴⁻, HSO⁴⁻, ClO⁴⁻, CH₃SO³⁻, CF₃CO²⁻, (CF₃SO₂)₂N⁻, (FSO₂)₂N⁻, Cl⁻, Br⁻, I⁻, SO⁴⁻, CF₃SO³⁻, (C₂F₅SO2)₂N⁻, and (C₂F₅SO₂)(CF₃SO₂)N⁻.

In a particular embodiment, the at least a solvent of the electrolytes is a polar solvent, a non-polar solvent and/or mixtures thereof; particularly a polar solvent or mixtures thereof; more particularly an aqueous solvent.

Having regard to the present disclosure, the selection of suitable polar solvents is well within the knowledge of the expert in the art. Non-limiting examples of suitable polar solvents are water, alcohols (methanol, ethanol, isopropanol, n-propanol, t-butanol, benzyl alcohol, etc), carbonates (eg. ethylene carbonate, dimethyl carbonate, diethyl carbonate, propylene carbonate, vinylene carbonate), ethers (eg. tetrahydrofuran, methyltetrahydrofuran, dioxolane, dimethyl ether, dimethoxyethane, diethylene glycol dimethyl ether, triethylene glycol dimethyl ether, tetraethylene glycol dimethyl ether, polyethylene glycol) sulfones (eg. ethyl methyl sulfone, dimethyl sulfone, tetramethylene sulfone), sulfoxides (eg. dimethylsulfoxide) amides and sulfamides (eg. dimethylformamide), nitriles (eg. acetonitrile), nitrobenzene and mixtures therefrom.

Having regard to the present disclosure, the selection of suitable non-polar solvents is well within the knowledge the expert in the art. In an embodiment, the non-polar solvent is selected from the group consisting of hydrocarbon solvents (e.g. pentane, hexane, cyclohexane, heptane), carbon tetrachloride, aromatic solvents (e.g. toluene, benzene, xylene) and some ethers (e.g. diethyl ether).

In a more particular embodiment, the electrolytes (catholyte and anolyte) comprise the same solvent or the same solvent mixture. In another particular embodiment, both electrolytes comprise polar solvents.

In another embodiment the electrolytes (catholyte and anolyte) comprise a different solvent or solvent mixture. In another particular embodiment one electrolyte comprises a polar solvent and the other electrolyte comprises a non-polar solvent.

Any type of salt may be suitable for the present invention. Non-limitative examples of salts suitable for the electrolytes are LiTFSi; TBAPF₆; LiClO₄; Bu₄BF₄; LiPF₆; Bu₄NClO₄, K₃PO₄, NaCl, KCl, Na₂SO₄ and/or mixtures thereof; preferably NaCl, KCI, Na₂SO₄ and/or mixtures thereof.

In a particular embodiment, each of the electrolytes (i.e. anolyte and catholyte) of the invention further comprises a basis such as NaOH and/or KOH; and/or an acid such as HCl, HBr, H₂SO₄ and/or HAc.

In another particular embodiment, each of the electrolytes (i.e. anolyte and catholyte) of the invention further comprises a glycol; preferably poly(ethylene glycol) (PEG); particularly PEG with an average molecular weight of between 10 and 10000; preferably an average molecular weight of between 100 and 8000; more preferably of between 200 and 6000; even more preferably of around 1000. In the context of the present invention, the "molecular weight" of the ligand is calculated as the z-average molecular weight as measured by high performance liquid chromatography (HPLC).

In a particular embodiment the electrolytes (i.e. anolyte and catholyte) of the invention comprise:
- water;
- poly(ethylene glycol) (PEG)
- a salt; preferably a sulfate salt, and
- redox active species.

In a more particular embodiment, the catholyte of the invention comprises:
a) a mixture comprising:
   - water;
   - polyethylene glycol) (PEG) in an amount of between 15 and 25 wt% of the total weight of the mixture; preferably between 18 and 23 wt%; more preferably between 21 and 22 wt%;
   - a sulfate salt in an amount of between 3 and 10 wt% of the total weight of the mixture; preferably between 4 and 8 wt%; more preferably around 5 wt%; and
b) redox active species; and/or
the anolyte of the invention comprises:
a) a mixture comprising:
   - water;
   - poly(ethylene glycol) (PEG) in an amount of between 2 and 10 wt% of the total weight of the mixture; preferably between 3 and 6 wt%; more preferably about 4 wt%;
   - a sulfate salt in an amount of between 10 and 25 wt% of the total weight of the mixture; preferably between 12 and 20 wt%; more preferably around 14 wt%; and
b) redox active species.

In a particular embodiment the sulfate salt is an alkali sulfate salt; preferably a Na₂SO₄ salt.

In a particular embodiment, the catholyte and the anolyte form two immiscible phases;
preferably wherein the catholyte is the top phase and the anolyte is the bottom phase.

In the context of the present invention "redox active species" relates to redox species that wherein one species (the reducing agent) undergoing oxidation (losing electrons) while another species (the oxidizing agent) undergoes reduction (gains electrons). For example, redox active species can be redox couples or redox pairs as known by the Expert in the art.

In another particular embodiment, the catholyte (4) and the anolyte (5) comprise different or the same redox active species; preferably different redox active species.

In a more particular embodiment, the redox active species used in the present invention comprise at least one element selected from Li, Na, Al, Ca, Mg, Pb, Ru, Fe, U, V, Cr, Ni, Mn, Cu, Ti, U, Ce, Zn and Co; preferably selected form Fe, Cr, Mg, Cu, Zn and Co; more preferably selected from Fe, Cr, Cu, Zn and Co.

In a particular embodiment, the redox active species used in the present invention comprise a redox couple comprising Fe²⁺/Fe³⁺; Cr²⁺/Cr³⁺, Ti²⁺/Ti³⁺; U³⁺/U⁴⁺; Ce³⁺/Ce⁴⁺; V²⁺/V³⁺; V⁴⁺/V⁵⁺, Cu⁺/Cu²⁺, Zn²⁺/Zn, Li⁺/Li, Na⁺/Na, Al³⁺/Al, Ca²⁺/Ca, Mg²⁺/Mg, Sn²⁺/Sn⁴⁺ or Pb²⁺/Pb/; preferably Fe²⁺/Fe³⁺; Cr²⁺/Cr³⁺, V²⁺/V³⁺; V⁴⁺/V⁵⁺ and Cu⁺/Cu²⁺.

In a particular embodiment, the redox active species used in the present invention comprise a redox couple comprising ruthenium(III)/ruthenium(II), s, Uranium(IV) and (V), V(III)/V(II), chromium (III)/chromium (IV), Mn(III)/Mn(II) and Cu/Cu(II).

In another particular embodiment, the redox active species used in the present invention comprise a redox couple comprising a group selected from quinones, viologens, quinoxalines, phenazines, nitroxides, pyridines, diols, flavines, phenothiazines, pyridinum derivates, benzene derivatives, phtalimides, antracene, thiadiazole, alloxacines, naphtoquines, perylene diimide, cyclopropenium, p-phenylenediamine, and organometallic species comprising elements selected from V, Fe, Co, Cu, Ru, Ni, Mn such as ferrocene/ferrocyanides derivatives.

In another particular embodiment, the redox active species used in the present invention comprise a redox couple comprising organometallic species comprising elements selected from V, Fe, Co, Cu, Ru, Ni, and Mn.

In another particular embodiment, the redox active species used in the present invention comprise a redox couple comprising a group selected from quinones, antraquinones, viologens, quinoxalines, phenazines, nitroxides, pyridines, diols, flavines, phenothiazines, pyridinum derivates, benzene derivatives, phtalimides, antracene, thiadiazole, alloxacines, naphtoquines, perylene diimide, cyclopropenium, p-phenylenediamine and (2,2,6,6-tetramethylpiperidine-1-oxyl) TEMPO based polymer; preferably a redox couple comprising a group selected from quinones, viologens, quinoxalines, phenazines, nitroxides, pyrdines, diols, and organometallic species.

In a preferred embodiment, the redox active species used in the redox flow battery of the present invention are methyl viologen (MV) and a (2,2,6,6-tetramethylpiperidine-1-oxyl) TEMPO based moiety; preferably 4-hydroxy-2,2,6,6-tetramethylpiperidin-1-oxyl (OH-TEMPO).

In a more preferred embodiment, the anolyte further comprises methyl viologen (MV); and the catholyte further comprises OH-TEMPO; particularly the anolyte comprises a solution of at least 0.01 M of MV and/or the catholyte comprises a solution of at least 0.01 M of OH-TEMPO; more particularly the anolyte comprises between 0.01 M and 1 M of MV and/or more particularly the catholyte comprises between 0.01 M and 1 M of OH-TEMPO; even more particularly the anolyte comprises between 0.05 M and 0.2 M of MV and/or more particularly the catholyte comprises between 0.05 M and 0.2 M of OH-TEMPO.

The anolyte and the catholyte of the invention form a biphasic immiscible system wherein the compounds of the redox active species have different solubility in each of the immiscible phases once the equilibrium between those phases has been reached. For example, when methyl viologen (MV) and 4-hydroxy-2,2,6,6-tetramethylpiperidin-1-oxyl (OH-TEMPO) are used as redox active species, then, OH-TEMPO is mostly dissolved in the catholyte and MV is mostly dissolved in the anolyte.

### Electrodes

As defined above, the compartment (1) comprised in the redox-flow battery of the present invention comprises:
- a positive electrode (2) and a negative electrode (3);
   wherein at least one electrode is a flow-through electrode; preferably wherein the positive electrode and the negative electrodes are flow-through electrodes; more preferably wherein the positive electrode and the negative electrodes are porous flow-through electrodes.

In the context of the present invention the term "electrodes" refer to the positive and negative electrodes. The electrodes (2, 3) are where the oxidation or reduction of redox active species of the electrolyte take place. The electrodes of the invention comprise, at least, a positive electrode (2) and a negative electrode (3). Both electrodes may have connection terminals that may be electrically connected to each other by a connection wire through which electrons are able to travel.

In a particular embodiment, the positive electrode (2) and the negative electrode (3) are facing each other; preferably are parallel and face each other. In a particular embodiment, the positive electrode (2) and the negative electrode (3) are aligned. In another particular embodiment, the electrodes are perpendicular to each other. In another particular embodiment the positive electrode and the negative electrode form an angle between 1 and 89 degrees; preferably between 2 and 60 degrees.

In a particular embodiment, the positive and/or negative electrode of the battery of the present invention are porous; preferably the positive and/or negative electrodes of the battery have a porosity of between 30% and 97%; preferably of between 50 and 96%; more preferably of between 80 and 95%; even more preferably of about 94%. Porosity is a measure of the void (i.e. "empty") spaces in a material, and is a fraction of the volume of voids over the total volume, between 0 and 1, or as a percentage between 0% and 100%.

In a particular embodiment, the positive and/or negative electrode of the battery of the present invention are porous flow-through electrodes. In the context of the present invention the expression "flow-through" regarding the electrodes, means that a fluid flows through or passes through said electrodes.

Non-limiting examples of suitable electrodes (2, 3) in the redox battery of the present invention are selected from a carbon matrix or a metallic matrix; particularly are selected from a porous carbon matrix or a porous metallic matrix; more preferably carbon paper, carbon felt, graphite felt, metallic mesh and metallic foam. In a preferred embodiment, the positive electrode (2) and/or the negative electrode (3) are made of graphite, more preferably graphite felt.

In an embodiment the positive and/or negative electrode of the battery of the present invention comprise a metallic matrix such as zinc, stainless steel, copper, nickel, lithium or sodium matrix or a carbon matrix such as graphite. In another particular embodiment, the matrix can be porous or non-porous; preferably the matrix is porous and can be selected from a mesh, paper or a felt.

In an embodiment the matrix of the electrode of the present invention is a flow-through matrix (i.e. a fluid can pass through it); in particular is a flow-through graphite felt.

In a preferred embodiment, the positive electrode (or cathode) (2) is made of graphite, more preferably is a graphite felt.

In a preferred embodiment, the negative electrode (or anode) (3) is made of graphite, more preferably is a graphite felt.

When the electrodes of the redox battery of the invention are porous, the electrolytes may or may not flow through them; preferably the electrolyte flows through them. In an embodiment, the electrodes act as inlets to the compartment (1); particularly as liquid flow inlets.

In a particular embodiment, the catholyte is able to flow from the catholyte reservoir to the compartment (1) through the positive electrode and/or the anolyte is able to flow from the anolyte reservoir to the compartment (1) through the negative electrode.

### One flow-through porous electrode

In a particular embodiment, the positive electrode (2) and/or the negative electrode (3) are flow-through electrodes; preferably porous flow-through electrodes.

In a particular embodiment, the redox flow battery (10) of the invention further comprises a catholyte reservoir container (6); wherein the positive electrode (2) is a flow-through electrode and wherein the catholyte reservoir container (6) is connected in fluidic communication with the compartment (1) through the positive electrode (2).

In a particular embodiment, the redox flow battery of the invention comprises a catholyte reservoir container (6) and an anolyte reservoir container (7);
wherein the positive electrode (2) is a flow-through electrode; preferably a porous flow-through electrode;
wherein the catholyte reservoir container (6) is connected in fluidic communication with the compartment (1) through the positive electrode (2); and
wherein the anolyte reservoir container (7) is connected in fluidic communication with the compartment (1).

In a particular embodiment, the redox battery (10) of the invention further comprises an anolyte reservoir container (7); wherein the negative electrode (3) is a flow-through electrode and wherein the anolyte reservoir container (7) is connected in fluidic communication with the compartment (1) through the negative electrode (3).

In a particular embodiment, the redox battery of the invention, further comprises a catholyte reservoir container (6) and an anolyte reservoir container (7); wherein the negative electrode (3) is a flow-through electrode; preferably a porous flow-through electrode; wherein the anolyte reservoir container (7) is connected in fluidic communication with the compartment (1) through the negative electrode (3); and wherein the catholyte reservoir container (6) is connected in fluidic communication with the compartment (1).

The at least one flow-through electrode comprises a longitudinal axis X-X'.

In a particular embodiment, the at least one flow-through electrode comprises two opposite sides.

The redox flow battery comprises means for directing the catholyte (4) or the anolyte (5) through the at least one flow-through electrode in a direction perpendicular to the longitudinal axis X-X' of the at least one flow-through electrode; preferably wherein said means are able to directing the catholyte (4) or the anolyte (5) into the compartment (1) or out of the compartment (1).

In a more particular embodiment, the redox flow battery comprises means for directing the catholyte (4) or the anolyte (5) through the at least one flow-through electrode from one side to the opposite side of said electrode.

### Two flow-through porous electrodes

In a particular embodiment, the positive electrode (2) and the negative electrode (3) are flow-through electrodes; preferably porous flow-through electrodes.

In a particular embodiment, the redox battery (10) of the invention further comprises a catholyte reservoir container (6) and an anolyte reservoir container (7); wherein the positive electrode (2) and the negative electrode (3) are flow-through electrodes; preferably porous flow-through electrodes; wherein the catholyte reservoir container (6) is connected in fluidic communication with the compartment (1) through the positive electrode (2); and wherein the anolyte reservoir container (7) is connected in fluid communication with the compartment (1) through the negative electrode (3).

In a particular embodiment, the compartment (1) of the redox-flow battery of the present invention comprises openings.

In a particular embodiment, the compartment (1) of the redox-flow battery of the present invention comprises four openings (such as two inlets and two outlets). In another particular embodiment, at least one of the openings of the compartment of the battery is covered by the flow-through electrode, preferably by a porous flow-through electrode.

In another particular embodiment, two openings of the compartment (1) of the redox-flow battery are covered by flow-through electrodes; particularly the two openings are facing each other; more particularly the two openings are parallel and facing each other.

In a particular embodiment, the at least one flow-through electrode the redox flow battery of the invention comprises a longitudinal axis X-X'; preferably comprises a longitudinal symmetry axis; particularly, the redox flow battery comprises means for directing the catholyte (4) and the anolyte (5) through the at least one flow-through electrode in a direction perpendicular to the longitudinal axis X-X'.

In a particular embodiment, the catholyte (4) and/or the anolyte (5) are only able to enter or exit the compartment (1) through the at least one flow-through electrode. In an embodiment, the catholyte (4) and/or the anolyte (5) flow from or into the compartment (1) only through the at least one flow-through electrode.

Deformations, perturbations and/or distortions of the interface between the two immiscible electrolytes might occur due to the catholyte and/or anolyte flows (for example when the electrolytes enter the compartment) causing mixing of electrolytes and therefore poor performance of the battery (low efficiency). Surprisingly, the authors of the present invention have found that when the immiscible electrolytes enter the compartment (1) facing each other, the interface is stretched and then, it is more stable in a wider range of flow rates. Thus, said interface suffers less deformations, perturbations and/or distortions.

### Distributor

In an embodiment, the redox battery of the invention further comprises a distributor (11), preferably a flow distributor, more preferably a liquid flow distributor. In a particular embodiment, the flow distributor (11) of the invention comprises at least an inlet and at least an outlet; preferably an inlet and several outlets.

In an embodiment, the catholyte reservoir container (6) is in fluidic communication with the positive electrode (2) through the distributor (11). Particularly, the catholyte reservoir comprises an inlet and an outlet and the flow distributor comprises an inlet; wherein the outlet of the catholyte reservoir container (6) is coupled with the inlet of the distributor (11). In a particular embodiment, the distributor (11) is coupled with the compartment (1) (i.e. with the positive electrode).

In another particular embodiment, the anolyte reservoir container (7) is in fluidic communication with the negative electrode (3) through the distributor (11). Particularly, the anolyte reservoir comprises an inlet and an outlet and the flow distributor comprises an inlet; wherein the outlet of the anolyte reservoir container (7) is coupled with the inlet of the distributor (11). More particularly, outlet of the distributor (11) is coupled with the inlet of the compartment (1) (i.e. with the negative electrode).

In a particular embodiment, the catholyte of the present invention is able to flow from the catholyte reservoir to the compartment (1) through the positive electrode and from the compartment (1) to the catholyte reservoir container (6) through an opening (outlet) of the compartment, and, at the same time, the anolyte is able to flow from the anolyte reservoir (7) to the compartment (1) through the negative electrode (3) and from the compartment (1) to the anolyte reservoir container (7) through a second opening (outlet) of the compartment.

Particularly, during charging process of the battery of the present invention (i.e. storing electricity), the anolyte flows through the negative electrode and the anolyte redox species are reduced therein and/or the catholyte flows through the positive electrode and the catholyte redox active species are oxidized therein.

Particularly, during discharging process of the battery of the present invention (i.e. delivering electricity), the anolyte flows through the negative electrode and the anolyte redox species are oxidized therein and/or the catholyte flows through the positive electrode and the catholyte redox active species are reduced therein.

In a particular embodiment, the catholyte of the present invention is able to flow from the catholyte reservoir to the compartment (1) through an opening (such as inlet) and from the compartment (1) to the catholyte reservoir container (6) through the positive electrode (2) (i.e. acting as an outlet) of the compartment, and, at the same time, the anolyte is able to flow from the anolyte reservoir (7) to the compartment (1) through an opening (such as inlet) and from the compartment (1) to the anolyte reservoir container (7) through the negative electrode (3) of the compartment.

Particularly, during charging process of the battery of the present invention (i.e. storing electricity), the anolyte flows through an opening into the compartment, and exits the compartment flowing through the negative electrode wherein the anolyte redox species are reduced and/or the catholyte flows through an opening into the compartment, then exits the compartment flowing through the positive electrode wherein the catholyte redox active species are oxidized.

Particularly, during discharging process of the battery of the present invention (i.e. delivering electricity), the anolyte the anolyte flows through an opening into the compartment, and exits the compartment flowing through the negative electrode wherein the anolyte redox species are oxidized and/or the catholyte flows through an opening into the compartment, then exits the compartment flowing through the positive electrode wherein the catholyte redox active species are reduced.

In the present invention at least an electrolyte flows through an electrode when entering the compartment (1) or when exiting the compartment (1). In the context of the invention, the expression "flow through" refers to crossing or passing through the electrode. Since the electrodes of the invention might be porous the porosity of the electrodes increases the contact area between the electrolytes (catholyte or anolyte) and the electrode.

### Reservoir container

The authors of the present invention have observed, that the anolyte and catholyte may be stored simultaneously in the same reservoir since they are immiscible between them. Thus, in an embodiment, the redox-flow battery (10) of the present invention comprises one reservoir container or tank configured to store, send and/or receive catholyte and anolyte from the compartment (1). In a particular embodiment, the reservoir container comprises at least an inlet and at least one outlet; preferably at least two inlets and at least two outlets. In an embodiment, the one reservoir container or tank is connected in fluid communication with the compartment (1) through at least two conducts (for example, one for the catholyte and the other one for the anolyte).

In another embodiment, the redox-flow battery (10) of the present invention comprises a catholyte reservoir container or tank (6) configured to store, send and/or receive catholyte from the compartment (1) and/or an anolyte reservoir container or tank (7) configured to store, send and/or receive anolyte from the compartment (1).

In an embodiment, the catholyte reservoir container (6) and the anolyte reservoir container (7) are connected in fluid communication with the compartment (1) through at least one conduct. Therefore, in an embodiment, during operation of the battery, the catholyte reservoir container (6) is able to send and to receive catholyte (compartment (1)). In addition, during operation of the battery, the anolyte reservoir container (7) is able to send and to receive anolyte (compartment (1)).

In a particular embodiment, the catholyte reservoir container (6) and/or the anolyte reservoir container (7) are made of a plastic material (e.g., polypropylene, polyethylene, etc.) or a coated steel material (e.g., a plastic-coated or rubber-coated, steel tank) to substantially avoid corrosion due to galvanic coupling. In another particular embodiment, the catholyte reservoir container (6) and/or the anolyte reservoir container (7) is made of any metallic material that avoids corrosion, such as stainless steel, titanium, nickel or nickel alloys; preferably stainless steel, nickel or nickel alloys.

In a particular embodiment, the catholyte reservoir container (6) and/or the anolyte reservoir container (7) comprise at least one inlet and one outlet; preferably at least one liquid flow inlet and one liquid flow outlet.

In a particular embodiment, the compartment (1) may be coupled to multiple catholyte reservoir containers (6) or anolyte reservoir containers (7), thereby providing for an increased storage capacity.

Preferably, the reservoir (6, 7), the catholyte reservoir container (6) and/or the anolyte reservoir container (7) may be disposed adjacent to the compartment (1) or located at a distance from the compartment (1), so as the catholyte reservoir container (6) or the anolyte reservoir container (7) is in fluid communication to the compartment (1) through at least one conduit or pipe.

### Power/source load

The redox-flow battery of the present invention may comprise a power/load source. The power/load source is any external electrical device such as an electrical grid, an electric vehicle, a domestic appliance or a sensor, that draws/transfers energy from/to the battery. In general, the power/load source have controllable voltages and/or current supplies or uptakes.

### Energy storage and/or delivery system

In another aspect, the invention is directed to an energy storage and/or delivery system comprising at least one redox flow battery (10) according to the present invention in any of its particular embodiments. In particular, the redox flow battery may act a secondary and/or rechargeable battery, i.e. the redox flow battery may be configured to be reversibly charged and discharged.

### Methods of operation of the battery

As mentioned before, the redox-flow battery of the present invention in any of its particular embodiments is configured to act as an energy storage and delivery system, i.e. it is configured to be reversibly charged and discharged.

### Method of storing electricity

Therefore, another aspect of the present invention is directed to a method of storing electricity comprising the steps of:
a) providing the redox flow battery (10) of the invention in any of its particular embodiments;
b) letting flow or pumping the electrolyte:
   - from the at least one reservoir container (6, 7) to the compartment (1) through the at least one flow-through electrode; preferably a porous flow-through electrode; or
   - from the compartment (1) to the at least one reservoir container (6, 7) through the at least one flow-through electrode;
   wherein the electrolyte is the catholyte (4) or the anolyte (5);
d) oxidizing the redox active species of the catholyte at the positive electrode (2) to the corresponding oxidized state, while the redox active species of the anolyte are reduced to the corresponding reduced state at the negative electrode (3); wherein the at least one flow-through electrode comprises a longitudinal axis X-X'; and wherein the electrolyte of step (b) flows in a direction perpendicular to the longitudinal axis X-X'.

In another particular embodiment the method of storing electricity comprising the steps of:
a) providing the redox flow battery (10) of the invention in any of its particular embodiments; wherein the catholyte (4) and the anolyte (5) are stored simultaneously in the at least one reservoir container (6, 7);
b) letting flow or pumping the catholyte (4) and the anolyte (5)
   - from the at least one reservoir container (6, 7) to the compartment (1) through at least one flow-through electrodes; or
   - from the compartment (1) to the at least one reservoir container (6, 7) through the at least one flow-through electrode;
   wherein the catholyte (4) enters or exits the compartment (1) through the flow-through positive electrode (2) and/or the anolyte (5) enters or exists the compartment (1) through the flow-through negative electrode (3);
c) oxidizing the redox active species of the catholyte at the positive electrode (2) to the corresponding oxidized state, while the redox active species of the anolyte are reduced to the corresponding reduced state at the negative electrode (3); and
d) optionally, letting flow or pumping the catholyte of step (c) and the anolyte of step (c) into the at least one reservoir container (6, 7).

In a particular embodiment, the method of storing electricity comprises the steps of:
a) providing the redox battery (10) of the present invention in any of its particular embodiments; wherein the battery comprises a catholyte reservoir container (6) and an anolyte reservoir container (7); wherein the positive electrode (2) and/or the negative electrode (3) are flow-through electrodes; preferably porous flow-through electrodes;
b) letting flow or pumping the catholyte from the at least one catholyte reservoir container (6) to the compartment (1) through the positive electrode (2) and/or pumping the anolyte from the anolyte reservoir container (7) to the compartment (1) through the negative electrode (3);
c) oxidizing the redox active species of the catholyte at the positive electrode (2) to the corresponding oxidized state, while the redox active species of the anolyte are reduced to the corresponding reduced state at the negative electrode (3); and
d) optionally, letting flow or pumping the catholyte of step (c) into the catholyte reservoir container (6) and the anolyte of step (c) into the anolyte reservoir container (7).

In a particular embodiment, the step (b) of the method of storing electricity of the present invention comprises letting flow or pumping the catholyte from the catholyte reservoir container (6) to the compartment (1) through the positive electrode (2) and/or letting flow or pumping the anolyte from the anolyte reservoir container (7) to the compartment (1) through the negative electrode (3); wherein the positive electrode (2) and/or the negative electrode (3) are flow-through electrodes; preferably porous flow-through electrodes.

In a more particular embodiment, the step (b) of the method of storing electricity of the present invention comprises pumping the catholyte from the catholyte reservoir container (6) to the compartment (1) through a flow distributor (11) and then through the positive electrode (2) and/or pumping the anolyte from the anolyte reservoir container (7) to the compartment (1) through a flow distributor (11) and then through the negative electrode (3); wherein the positive electrode (2) and/or the negative electrode (3) are flow-through electrodes; preferably porous flow-through electrodes.

In an embodiment, the step (b) of the method of storing electricity of the present invention comprises letting flow or pumping the catholyte from the compartment (1) to catholyte reservoir container (6) through the positive electrode (2) and/or letting flow or pumping the anolyte from the compartment (1) to the anolyte reservoir container (7) through the negative electrode (3).

In an embodiment, the catholyte and/or the anolyte flow through the flow distributor perpendicularly to the interface between the electrolytes.

In another particular embodiment, the catholyte and/or the anolyte enter the compartment (1) perpendicularly to the interface between the electrolytes and facing each other.

An illustrative non-limiting example of an embodiment of the redox-flow battery of the invention works as storage system (charging mode) is described as follows: during charging process of an embodiment of the battery of the present invention, the catholyte flows through the positive electrode and the redox active species of the catholyte are oxidized. Then, the electrons released on the positive electrode of the battery of the present invention move through an external circuit, i.e. the power/load source, to do useful work. At the same time, the anolyte flows through the negative electrode and the redox active species of the anolyte are reduced (capture electrons) to the corresponding reduced state at the negative electrode. Catholyte and anolyte form two immiscible phases separated by an interface. During the charging process, ions migrate from one phase to the other crossing the interface to keep electro-neutrality between them. After the reactions, the catholyte and anolyte are drawn to the same or to different reservoir containers.

### Method of delivering electricity

Therefore, another aspect of the present invention is directed to a method of delivering electricity comprising the steps of:
a) providing the redox flow battery (10) of the invention in any of its particular embodiments;
b) letting flow or pumping the electrolyte
   - from the at least one reservoir container (6,7) to the compartment (1) through the flow-through electrode or
   - from the compartment (1) to the at least one reservoir container (6, 7) through the at least one flow-through electrode;

   ; preferably a porous flow-through electrode;
   wherein the electrolyte is the catholyte (4) or the anolyte (5);
c) reducing the redox active species of the catholyte at the positive electrode (2) to their reduced state while the redox active species of the anolyte are oxidized to the corresponding oxidized state at the negative electrode (3);
   wherein the at least one flow-through electrode comprises a longitudinal axis X-X'; and wherein the electrolyte of step (b) flows in a direction perpendicular to the longitudinal axis X-X'.

In a particular embodiment, the method of delivering electricity of the invention comprises the steps of:
a) providing the redox battery (10) of the present invention in any of its particular embodiments; wherein the catholyte (4) and the anolyte (5) and the anolyte are stored simultaneously in the at least one reservoir container (6, 7);
b) letting flow or pumping the catholyte (4) and the anolyte (5) from
   the at least one reservoir container (6, 7) to the compartment (1) through at least one flow-through electrodes wherein the catholyte (4) enters the compartment (1) through the flow-through positive electrode (2) and/or the anolyte (5) enters the compartment (1) through the flow-through negative electrode (3); or
   from the compartment (1) to the at least one reservoir container (6, 7) through the at least one flow-through electrode;
c) reducing the redox active species of the catholyte at the positive electrode (2) to their reduced state while the redox active species of the anolyte are oxidized to the corresponding oxidized state at the negative electrode (3); and
d) optionally, letting flow or pumping the catholyte of step (b) into the catholyte reservoir container (6) and the anolyte of step (b) into the anolyte reservoir container (7).

In a particular embodiment, the method of delivering electricity of the invention comprises the steps of:
a) providing the redox battery (10) of the present invention in any of its particular embodiments; wherein the battery comprises a catholyte reservoir container (6) and an anolyte reservoir container (7); wherein the positive electrode (2) and/or the negative electrode (3) are flow-through electrodes; preferably porous flow-through electrodes;
b) letting flow or pumping the catholyte from the catholyte reservoir container (6) to the compartment (1) through the positive electrode (2) and/or pumping the anolyte from the anolyte reservoir container (7) to the compartment (1) through the negative electrode (3);
c) reducing the redox active species of the catholyte at the positive electrode (2) to their reduced state while the redox active species of the anolyte are oxidized to the corresponding oxidized state at the negative electrode (3); and
d) optionally, letting flow or pumping the catholyte of step (b) into the catholyte reservoir container (6) and the anolyte of step (b) into the anolyte reservoir container (7).

In a particular embodiment, the step (b) of the method of delivering electricity of the present invention comprises pumping the catholyte from the catholyte reservoir container (6) to the compartment (1) through the positive electrode (2) and/or pumping the anolyte from the anolyte reservoir container (7) to the compartment (1) through the negative electrode (3); wherein the positive electrode (2) and/or the negative electrode (3) are flow-through electrodes; preferably porous flow-through electrodes.

In a particular embodiment, the step (b) of the method of delivering electricity of the present invention comprises pumping the catholyte from the catholyte reservoir container (6) to the compartment (1) through a flow distributor (11) and then through the positive electrode (2) and/or pumping the anolyte from the anolyte reservoir container (7) to the compartment (1) through a flow distributor (11) and then through the negative electrode (3); wherein the positive electrode (2) and/or the negative electrode (3) are flow-through electrodes; preferably porous flow-through electrodes.

In an embodiment, the step (b) of the method of delivering electricity of the present invention comprises letting flow or pumping the catholyte from the compartment (1) to catholyte reservoir container (6) through the positive electrode (2) and/or letting flow or pumping the anolyte from the compartment (1) to the anolyte reservoir container (7) through the negative electrode (3).

In an embodiment, the catholyte and/or the anolyte flow through the flow distributor perpendicularly to the interface between the electrolytes.

In another particular embodiment, the catholyte and/or the anolyte enter the compartment (1) perpendicularly to the interface between the electrolytes and facing each other.

An illustrative example on how the redox-flow battery of the invention works as delivery system (discharging mode) is described as follows: During the discharging process of an embodiment of the battery of the present invention, the catholyte and/or the anolyte flow from a container to the main compartment through and electrode. Then, the redox active species of the catholyte are reduced. At the same time, the anolyte redox active species are oxidized to the corresponding oxidized state at the negative electrode. After the reactions, the catholyte and the anolyte are drawn to the same or to different reservoir containers. Catholyte and anolyte form two immiscible phases separated by an interface. During the discharging process, ions migrate from one phase to the other crossing the interface to keep electro-neutrality between them.

In an embodiment, the positive electrode (2) and/or the negative electrode (3) are flow-through electrodes; and
the catholyte is able to
   flow from the reservoir container (6,7) into the compartment (1) through the positive electrode, or
   flow out of the compartment (1) to the reservoir container (6,7) through the positive electrode; and/or
wherein the anolyte is able to
   flow from the reservoir container (6,7) into the compartment (1) through the negative electrode; or
   flow out of the compartment (1) to the reservoir container (6,7) through the negative electrode.

### Energy storage and/or delivery system

Another additional aspect of the invention is directed to an energy storage and/or delivery system comprising at least one redox battery (10).

### Applications

Additional aspects of the present invention are directed to the use of the redox-flow battery as defined above in any of its particular embodiments, to store and/or deliver energy. To this end, the redox flow battery of the present invention may be used individually, as modular redox-flow battery system, or in combination with other energy storage technologies (e.g., supercapacitors, etc.) and may be integrated into or with various systems and/or devices to improve efficiency, address energy demands, etc.

Furthermore, the redox battery of the invention may be used in a variety of applications having different energy delivery and/or storage needs, including, but not limited to, very large scale applications (e.g., utilities, functioning as a green energy source for a smart grid, energy storage for use in combination with renewable energy resources such as wind and solar power, etc.) and smaller applications (e.g. backup power, residential power, electromobility sector, etc.).

The present invention will be described in further detail with reference to the following examples. These examples are for illustrative purposes only and are not intended to limit the scope of the present invention.

### EXAMPLES

### EXAMPLE 1: Redox flow batteries performance.

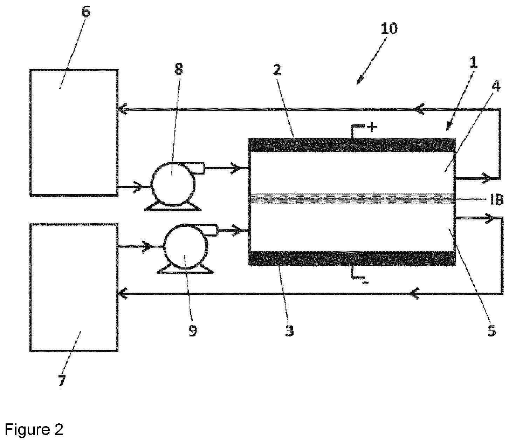

The performance of a redox flow battery comprising two porous flow-through electrodes and a main compartment containing a pair of immiscible electrolytes (namely Battery A), was tested. In addition, the performance of Battery A was compared with the performance of a flow-by battery comprising the same pair of immiscible electrolytes (namely Battery B). Battery A and B were as follows:
*Battery A* was a redox flow battery comprising two porous flow-through electrodes (flow-through battery) and a main compartment containing a pair of immiscible electrolytes. Battery A did not have a separator between the electrolytes. The electrodes of the battery were facing each other. In addition, those electrodes were placed parallel to the interface between the two immiscible electrolytes (see Figure 1) and, since they were flow-through electrodes, they acted as inlets/outlets of the main compartment. The redox flow battery A comprises two external reservoirs containing the electrolytes. Each electrolyte was in fluidic communication with its reservoir and with the main compartment through an electrode. Thus, the electrolytes were able to flow through the electrodes (i.e. the porous flow-through electrodes acted as inlets/outlets of the main compartment). In addition, the battery comprised flow distributors placed between the porous flow-through electrodes and the reservoirs. Furthermore, the electrolytes were able to flow from and to the main compartment being pumped by peristaltic pumps.
*Battery B* was a redox flow battery comprising two flow-by electrodes (flow-by battery) and a main compartment containing a pair of immiscible electrolytes. Battery B did not have a separator between the electrolytes. The electrodes of the battery were parallel to the interface between the two immiscible electrolytes and were facing each other (see Figure 2). The redox flow battery comprises two external reservoirs containing the electrolytes. Each electrolyte was in fluidic communication with its reservoir and with the main compartment through openings (inlets and/or outlets) in the main compartment. In addition, the electrolytes were able to flow from and to the inlets/outlets of the main compartment being pumped by pumps. Each electrolyte was able to flow by the surface of an electrode (parallel to the electrode and to the interface) following the flow field.

Battery A and battery B used the same pair of immiscible electrolytes. No membrane or separator were employed in neither of these batteries to separate the electrolytes.

Batteries A and B were assembled using the same porous graphite felts (SGL Carbon group) as positive and negative electrode. However, only in Battery A the electrodes acted as inlets/outlets of the main compartment letting the electrolytes pass through them (see Figure 1). Graphite felts were pretreated in a furnace at 500 °C during 2h for improving their hydrophilicity. In both cases the two electrodes were facing each other in a parallel position and were separated a distance of 3 mm. The cell prototypes were in-lab designed and milled in polyoxymethylene (POM-C).

For the preparation of the pair of electrolytes an aqueous biphasic system (ABS) was gravimetrically prepared using PEG1000, Na₂SO₄ and water. Once the thermodynamic equilibrium was achieved the two immiscible phases of the aqueous byphasic system separated. The composition of each phase is shown below in the table 1.

**Table 1. Composition of the electrolytes**

| | **Na₂SO₄ (wt%)** | **PEG₁₀₀₀ (wt%)** | **H₂O (wt%)** | **Conductivity (mS/cm)** |
|---|---|---|---|---|
| Top phase (catholyte) | 5.23 (0,43 M) | 21.40 | 73.37 | 21.8 |
| Bottom phase (anolyte) | 14.19 (1,18 M) | 3.86 | 81.95 | 71.0 |

After separation of the immiscible phases, redox active species (redox molecules) were added to each phase. The redox active species used in the electrolytes were 4-hydroxy-2,2,6,6-tetramethylpiperidin-1-oxyl (OH-TEMPO) in the top phase (catholyte) (0.1 M concentration) and methyl viologen (MV) in the bottom phase (anolyte) (0.1 M concentration). The electrolytes were purged with argon before being used, and the reservoirs (storage tank) were kept with an argon overpressure during charge.

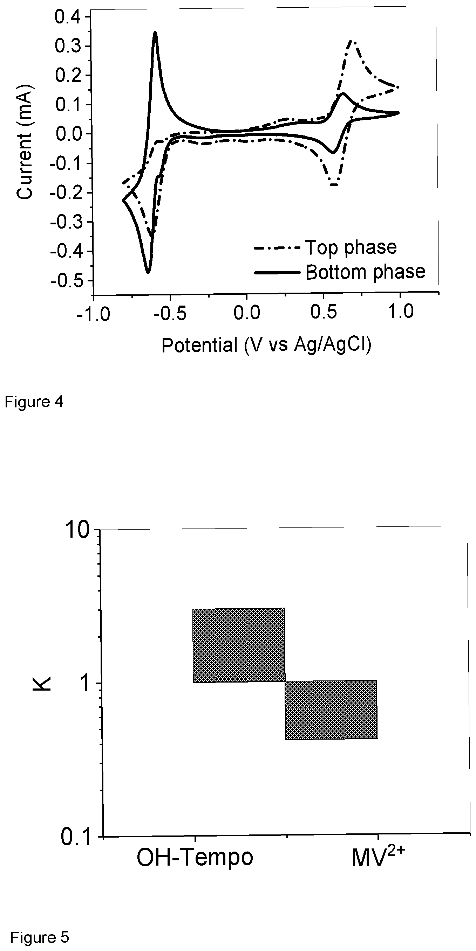

The authors have observed that the partition coefficients of both MV and OH-TEMPO between the two immiscible electrolytes were adequate to guarantee selectivity and minimal crossover or cross-contamination (see Figure 5).

In addition, the redox potentials of these two active species were very different so their combination in a battery resulted in a battery with a high theoretical voltage of 1,3 V. The redox potentials the active species were measured by cyclic voltammetry of in 3-electrode electrochemical cells at a scan rate of 20 mV/s and at a concentration of OH-TEMPO of 0.1 M (see Figure 4 (a)) and of MV²⁺ of 0.1 M (see Figure 4 (b)).

The electrochemical performance of both redox flow batteries A and B was investigated during the charging step. The redox flow batteries were charged under galvanostatic conditions (constant current) at room temperature using a Biologic VPM3 potentiostat. During charge, the MV molecules were reduced in the negative electrode and the OH-TEMPO molecules are oxidized in the positive electrode. Different galvanostatic experiments were carried out by using different current densities ranging from 4.4 to 20 mAcm⁻² and different flow rates (see table 2 below). A voltage limit of 1.7 V was imposed in the experiments to avoid parasitic reactions occurring at higher voltages.

**Table 2. Flow rates employed for each electrolyte in the two redox flow batteries.**

| | | | | | | | | |
|---|---|---|---|---|---|---|---|---|
| Flow rate (Battery B) | A | B | C | Flow rate (Battery A) | B | C | D | E |
| Top Phase (mL/min) | 6,5 | 13 | 28 | Top Phase (mL/min) | 12 | 26 | 46 | 73 |
| Bottom Phase | 13 | 26 | 37 | Bottom Phase | 16 | 33 | 64 | 97 |
| (mL/min) | | | | (mL/min) | | | | |

### Effect of Flow rate in Battery Performance:

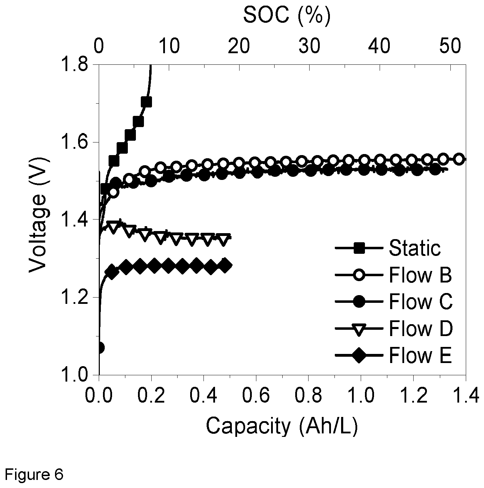

Figure 6 shows the voltage charge profile of the Battery A during galvanostatic charge at 11 mAcm⁻². Different lines represent experiments at different flow rates according to Table 2. When the Battery A is operated in static mode (Figure 6), its medium charged battery voltage is around 1.6V reaching the voltage cut-off limit (1.7V) before achieving 20% of capacity (SOC). The diffusion mass transport was the limiting factor in the static mode because only the MV and OH-TEMPO molecules close enough to the electrode were able to undergo reduction or oxidation reactions, respectively. This means that, in practice, only the electrolyte in contact or very close to the porous electrode might be used to store energy in static mode. Interestingly, Figure 6 shows that the charging potentials decrease significantly when the battery is operating under flowing conditions. In fact, the faster the flow rate the lower the overpotential. Note that the charge voltage is close to 1.3V (theoretical voltage of this battery) at high flow rate (Flow E), meaning that, under this flow conditions, the overpotential related to the mass transport limitation is negligible. Experiments in Figure 6 demonstrated that the electrolytes flowed through the electrodes in Battery A renovating the active species at a sufficient rate to significantly decrease the diffusion mass transport limitation. Since the overpotential was drastically reduced, it was also demonstrated that in the Battery A (flow-through battery) it was possible to achieve much higher state of charge (SOC) by flowing the electrolytes as compared with static mode (see Flow B and Flow C in Figure 6).

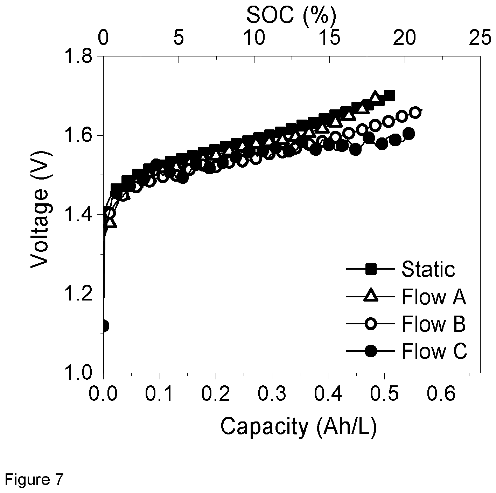

Figure 7 shows the voltage charge profile of the Battery B (flow-by battery) during galvanostatic charge at the same current density (11 mAcm⁻²). When battery B operated in static mode, their medium charged battery voltage is around 1.6V reaching the voltage cut-off limit (1.7V) before achieving 20% SOC. This result was similar to the one obtain for battery A working in static mode. Again, the diffusion mass transport was the limiting factor in the static mode. However, the behavior under flowing conditions is totally different between the two batteries A and B. In flow-by battery B the electrolytes are not passing *"through"* the electrodes but are passing "by" the electrodes. Figure 7 shows that the effect of the flow rate on the charge voltage of flow-by battery B is irrelevant and only a slight decrease of the overpotential is observed.

In addition, the authors of the present invention have observed that at higher flow rates (higher than Flow C) the formation of the interface between the two immiscible electrolytes was unstable in the flow-by battery B. Thus, charging the battery was not possible at high flow rates.

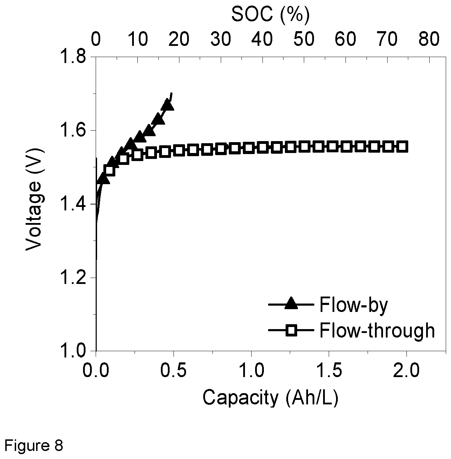

For comparative purposes, Figure 8 shows the voltage profile of flow-through battery A and of flow-by battery B at the same current density (11 mA cm⁻²) and flow rate (flow B). Results showed that flow-through battery A was able to reach higher SOC (-75%) than flow-by battery (18%) in similar experimental conditions. Thus, battery A reached higher energy density than battery B.

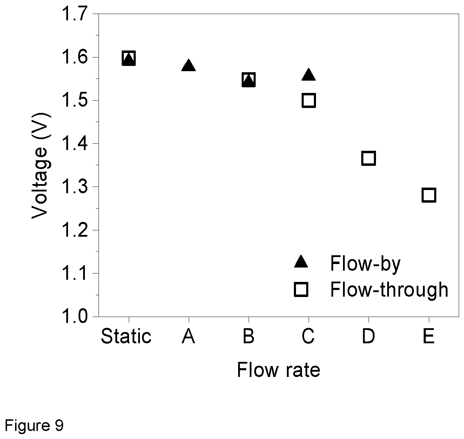

Figure 9 represents the medium charge voltage obtained from curves represented in Figure 6 and 7 as a function of the flow rate for the two different batteries A and B. It was evidenced that both batteries present the same medium charging voltage in static mode or with very low flow rates (Flows named A-B in Figures 6 and 7). However, at medium rates (Flow C in Figure 9) the medium charging voltages of flow-through battery A are significantly lower than those of the flow-by battery B. As explained before, in battery A the electrolytes are forced to pass *"through"* the electrodes reducing the overpotential associated to diffusion mass transport. In fact, the medium charge voltage exhibited by the flow-through battery at high rates (Flow D and Flow E) decreased rapidly due to the minimal contribution of the diffusion transport limitation to the overall overpotential of battery A.

Surprisingly, another technological advantage of battery A is that the liquid-liquid interface stays stable even at high flow rates. Consequently, higher flow rates might be applied to Battery A making possible to charge the battery at a voltage very close to the theoretical one (see Figure 9). On the contrary, at high flow rates (Flow D and E) the flow-by battery B (flow-by) could not be charged because the interface between the two electrolytes was not stable enough.

### Effect of Current Density in Battery Performance:

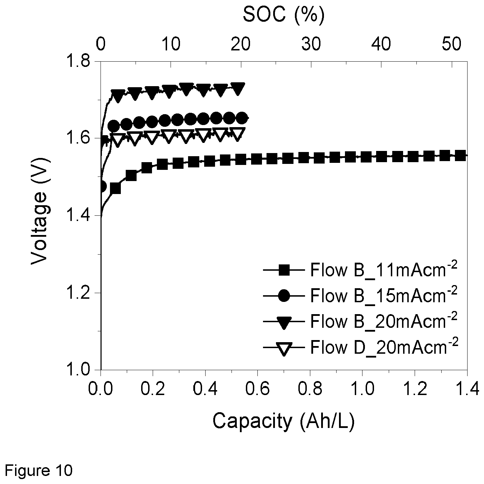

Figure 10 shows the voltage profile of Battery A when it is charged at different currents (11, 15 and 20 mA cm⁻²). At the same flow rate (Flow B in the figure), an increase in the current density caused an increase in the overpotential that eventually resulted in a higher charging voltage (from -1.5 V at 11 mA cm⁻² to -1.7 V at 20 mA cm⁻²). Figure 10 also shows that battery A was affected by flow rate. By increasing the flow rate from Flow B to Flow D the overpotential due to mass diffusion limitation decreases and the charging voltage of the battery also decreases; from -1.7 V to -1.6 V when the current density was maintained constant at 20 mA cm⁻². This experiment demonstrated that the current density, which is directly related to the power density of the battery, can be increased by increasing the flow rate in Battery A.

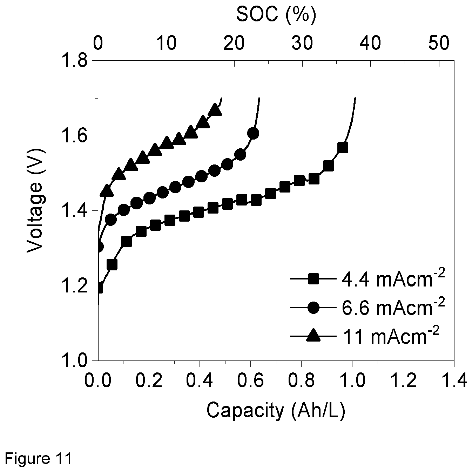

Figure 11 shows the voltage charge profile (Voltage (V) versus Capacity (Ah/L) of flow-by battery B at different currents. The voltage of battery B was higher than the one of battery A in all cases. Moreover, results show that voltage values increased rapidly for Battery B due to the saturation of charged species in flow-by electrodes. While charged species were being continuously renovated in flow-through electrodes, active species accumulate nearby flow-by electrodes in Battery B causing huge overpotentials.

Figure11 shows that when current increases, the overpotential was increased. The maximum state of charge of battery B was about 38 SOC% for 4.4 mA cm⁻² and about 18 SOC% for 11 mA cm⁻². The highest useful current density was 11 mA cm⁻² for Battery B, which was remarkably about half the current in battery A (20 mA cm⁻²) at the same flow rate.

Advantageously, the redox active species of Battery A cross through the flow-through electrodes of said battery, being continuously renovated. Consequently, battery A presents less overpotentials than flow-by battery B.

In summary, flow-through battery A is able to operate at high current densities and high flow rates. Battery A also reaches high states of charge (SOC). Moreover, Battery A has an improved performance over previous designs such as flow-by battery B.

### Example 2.

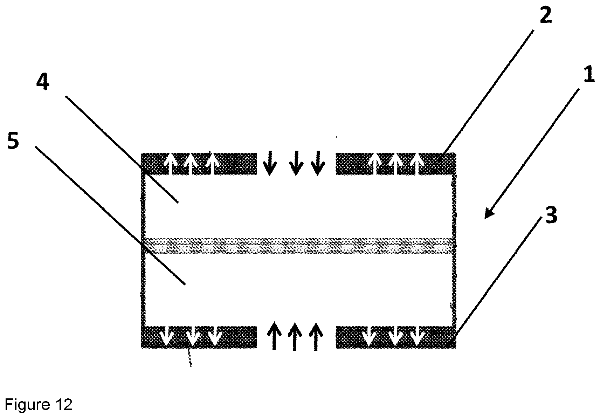

*Battery* C (Figure 12) is a redox flow battery comprising two porous flow-through electrodes (flow-through battery) and a main compartment containing a pair of immiscible electrolytes. Battery C does not have a separator between the electrolytes of any kind. The electrodes of the battery are facing each other. In addition, those electrodes are placed parallel to the interface between the two immiscible electrolytes (see Figure 1) and, since they are flow-through electrodes, they act as outlets of the main compartment. The redox flow battery C comprises two external reservoirs containing the electrolytes. Each electrolyte is in fluidic communication with its reservoir and with the main compartment through a conduct and through a flow-through electrode. Thus, the electrolytes are able to flow through the electrodes (i.e. the porous flow-through electrodes act as outlets of the main compartment). In addition, the battery comprises two inlets, each of them placed in the center of each of the electrodes. Furthermore, the electrolytes are able to flow from and to the main compartment being pumped by peristaltic pumps.

Battery C shows a reduction of the undesired discharging processes taking place in the interface formed between the two immiscible phases of the electrolytes.

## Claims

1. A redox flow battery (10) comprising:
a) a compartment (1) comprising
- a positive electrode (2) and a negative electrode (3);
wherein at least one electrode is a flow-through electrode; preferably a porous flow-through electrode;
- a catholyte (4) and an anolyte (5);
wherein the catholyte (4) and the anolyte (5) are immiscible between them; and wherein the catholyte and the anolyte are in contact through a liquid-liquid interface between them; and wherein the liquid-liquid interface between the catholyte and the anolyte consist of the catholyte and the anolyte;
b) at least one reservoir container (6, 7) connected in fluidic communication with the compartment (1) through the at least one flow-through electrode (2, 3);
wherein said at least one reservoir container comprises the catholyte (4) and/or the anolyte (5);
wherein the at least one flow-through electrode comprises a longitudinal axis X-X'; and wherein the redox flow battery comprises means for directing the catholyte (4) or the anolyte (5) through the at least one flow-through electrode in a direction perpendicular to the longitudinal axis X-X'.

2. The redox flow battery according to claim 1, wherein there is a flow distributor (11) between the at least one reservoir container (6, 7) and the at least one flow-through electrode.

3. The redox flow battery according to any one of claims 1 or 2, wherein the positive electrode (2) and the negative electrode (3) are flow-through electrodes, and/or wherein the positive electrode (2) and the negative electrode (3) are facing each other; preferably wherein the positive electrode (2) and the negative electrode (3) are parallel.

4. The redox flow battery according to any one of claims 1 to 3, wherein the positive electrode (2) and the negative electrode (3) are selected from a carbon matrix or a metallic matrix; particularly are selected from carbon paper, carbon felt, graphite felt, metallic mesh and/or metallic foam.

5. The redox flow battery according to any one of claims 1 to 4, wherein the catholyte (4) and the anolyte (5) comprise different or the same redox active species; preferably different redox active species, more preferably wherein the redox active species are organic redox couples comprising a group selected from quinones, viologens, quinoxalines, phenazines, nitroxides, pyrdines, diols, and organometallic species.

6. The redox flow battery according to any one of claims 1 to 5, wherein the redox flow battery comprises at least one pump (8, 9).

7. The redox flow battery according to any of claims 1 to 6, wherein the redox flow battery comprises means for directing the catholyte (4) or the anolyte (5) into the compartment (1) or out of the compartment (1).

8. The redox flow battery according to any one of the previous claims, wherein the at least one flow-through electrode is an inlet or an outlet of the compartment (1).

9. The redox flow battery according to any one of the previous claims, wherein at least a catholyte reservoir container (6) and an anolyte reservoir container (7) are present; and wherein the catholyte reservoir container (6) is connected in fluidic communication with the compartment (1) through the positive electrode (2) and wherein the anolyte reservoir container (7) is connected in fluid communication with the compartment (1) through the negative electrode (3).

10. The redox flow battery according to claim 9, wherein the redox battery comprises at least one pump (8) in fluidic communication with the catholyte reservoir container (6) and with the compartment (1) and/or at least one pump (9) in fluidic communication with the anolyte reservoir container (7) and with the compartment (1).

11. The redox flow battery according to claim 10, wherein the flow-through electrodes are outlets of the compartment (1) and wherein the compartment (1) further comprises two inlets; preferably wherein each of the inlets is placed in the center of one of the electrodes; or wherein the flow-through electrodes are inlets of the compartment (1) and wherein the compartment (1) further comprises at least two outlets.

12. An energy storage and/or delivery system comprising at least one redox flow battery (10) according to any of claims 1 to 11.

13. A method of storing electricity comprising the steps of:
a) providing a redox flow battery (10) according to any of claims 1 to 11;
b) letting flow or pumping the electrolyte
- from the at least one reservoir container (6, 7) into the compartment (1) through the at least one flow-through electrode; or
- from the compartment (1) to the at least one reservoir container (6, 7) through the at least one flow-through electrode;
wherein the electrolyte is the catholyte (4) and/or the anolyte (5); and
c) oxidizing the redox active species of the catholyte at the positive electrode (2) to the corresponding oxidized state, while the redox active species of the anolyte are reduced to the corresponding reduced state at the negative electrode (3);
wherein the at least one flow-through electrode comprises a longitudinal axis X-X'; and wherein the electrolyte of step (b) flows in a direction perpendicular to the longitudinal axis X-X.

14. A method of delivering electricity comprising the steps of:
a) providing a redox flow battery according to any of claims 1 to 11;
b) letting flow or pumping the electrolyte
- from the at least one reservoir container (6, 7) to the compartment (1) through the at least one flow-through electrode; or
- from the compartment (1) to the at least one reservoir container (6, 7) through the at least one flow-through electrode;
wherein the electrolyte is the catholyte (4) or the anolyte (5); and
c) reducing the redox active species of the catholyte at the positive electrode (2) to their reduced state while the redox active species of the anolyte are oxidized to the corresponding oxidized state at the negative electrode (3);
wherein the at least one flow-through electrode comprises a longitudinal axis X-X'; and wherein the electrolyte of step (b) flows in a direction perpendicular to the longitudinal axis X-X'.

15. Use of the redox flow battery (10) according to any of claims 1 to 11 to store and/or deliver electricity.

## Patentansprüche

1. Redox-Flow-Batterie (10), umfassend:
a) ein Kompartiment (1) umfassend
- eine positive Elektrode (2) und eine negative Elektrode (3);
wobei mindestens eine Elektrode eine Durchflusselektrode ist, vorzugsweise eine poröse Durchflusselektrode;
- einen Katholyten (4) und einen Anolyten (5);
wobei der Katholyt (4) und der Anolyt (5) nicht untereinander mischbar sind; und wobei der Katholyt und der Anolyt über eine Flüssig-Flüssig-Grenzfläche zwischen ihnen in Kontakt sind; und wobei die Flüssig-Flüssig-Grenzfläche zwischen Katholyt und Anolyt aus dem Katholyten und dem Anolyten besteht;
b) mindestens einen Vorratsbehälter (6, 7), der mit dem Kompartiment (1) über die mindestens eine Durchflusselektrode (2, 3) in Fluidverbindung steht;
wobei der mindestens eine Vorratsbehälter den Katholyten (4) und/oder den Anolyten (5) enthält;
wobei die mindestens eine Durchflusselektrode eine Längsachse X-X` aufweist; und wobei die Redox-Flow-Batterie eine Einrichtung zum Leiten des Katholyten (4) oder des Anolyten (5) durch die mindestens eine Durchflusselektrode in einer Richtung senkrecht zur Längsachse X-X` aufweist.

2. Redox-Flow-Batterie nach Anspruch 1, wobei sich zwischen dem mindestens einen Vorratsbehälter (6, 7) und der mindestens einen Durchflusselektrode ein Durchflussverteiler (11) befindet.

3. Redox-Flow-Batterie nach einem der Ansprüche 1 oder 2, wobei die positive Elektrode (2) und die negative Elektrode (3) Durchflusselektroden sind, und/oder wobei die positive Elektrode (2) und die negative Elektrode (3) einander zugewandt sind, vorzugsweise wobei die positive Elektrode (2) und die negative Elektrode (3) parallel sind.

4. Redox-Flow-Batterie nach einem der Ansprüche 1 bis 3, wobei die positive Elektrode (2) und die negative Elektrode (3) ausgewählt sind aus einer Kohlenstoffmatrix oder einer metallischen Matrix, insbesondere aus Kohlepapier, Kohlefilz, Graphitfilz, Metallgewebe und/oder Metallschaum.

5. Redox-Flow-Batterie nach einem der Ansprüche 1 bis 4, wobei der Katholyt (4) und der Anolyt (5) unterschiedliche oder gleiche redoxaktive Spezies umfassen, vorzugsweise unterschiedliche redoxaktive Spezies, wobei die redoxaktiven Spezies besonders bevorzugt organische Redoxpaare sind, umfassend eine Gruppe ausgewählt unter Chinonen, Viologenen, Chinoxalinen, Phenazinen, Nitroxiden, Pyridinen, Diolen und organometallischen Spezies.

6. Redox-Flow-Batterie nach einem der Ansprüche 1 bis 5, wobei die Redox-Flow-Batterie mindestens eine Pumpe (8, 9) umfasst.

7. Redox-Flow-Batterie nach einem der Ansprüche 1 bis 6, wobei die Redox-Flow-Batterie Mittel umfasst, um den Katholyten (4) oder den Anolyten (5) in das Kompartiment (1) oder aus dem Kompartiment (1) zu leiten.

8. Redox-Flow-Batterie nach einem der vorhergehenden Ansprüche, wobei die mindestens eine Durchflusselektrode ein Einlass oder ein Auslass des Kompartiments (1) ist.

9. Redox-Flow-Batterie nach einem der vorhergehenden Ansprüche, wobei mindestens ein Katholyt-Vorratsbehälter (6) und ein Anolyt-Vorratsbehälter (7) vorhanden sind; und wobei der Katholyt-Vorratsbehälter (6) mit dem Kompartiment (1) über die positive Elektrode (2) in Fluidverbindung steht und wobei der Anolyt-Vorratsbehälter (7) mit dem Kompartiment (1) über die negative Elektrode (3) in Fluidverbindung steht.

10. Redox-Flow-Batterie nach Anspruch 9, wobei die Redox-Batterie mindestens eine Pumpe (8) in Fluidverbindung mit dem Katholyt-Vorratsbehälter (6) und dem Kompartiment (1) umfasst, und/oder mindestens eine Pumpe (9) in Fluidverbindung mit dem Anolyt-Vorratsbehälter (7) und dem Kompartiment (1).

11. Redox-Flow-Batterie nach Anspruch 10, wobei die Durchflusselektroden Auslässe des Kompartiments (1) sind und wobei das Kompartiment (1) zusätzlich zwei Einlässe aufweist, wobei vorzugsweise jeder der Einlässe in der Mitte einer der Elektroden angeordnet ist; oder wobei die Durchflusselektroden Einlässe des Kompartiments (1) sind und wobei das Kompartiment (1) zusätzlich mindestens zwei Auslässe aufweist.

12. Energiespeicher- und/oder -abgabesystem, umfassend mindestens eine Redox-Flow-Batterie (10) nach einem der Ansprüche 1 bis 11.

13. Verfahren zum Speichern von Elektrizität, umfassend die folgenden Schritte:
a) Bereitstellen einer Redox-Flow-Batterie (10) nach einem der Ansprüche 1 bis 11;
b) Fließenlassen oder Pumpen des Elektrolyten
- aus dem mindestens einen Vorratsbehälter (6, 7) in das Kompartiment (1) durch die mindestens eine Durchflusselektrode; oder
- aus dem Kompartiment (1) zum mindestens einen Vorratsbehälter (6, 7) durch die mindestens eine Durchflusselektrode;
wobei der Elektrolyt der Katholyt (4) und/oder der Anolyt (5) ist; und
c) Oxidieren der redoxaktiven Spezies des Katholyten an der positiven Elektrode (2) in den entsprechenden oxidierten Zustand, während die redoxaktiven Spezies des Anolyten an der negativen Elektrode (3) in den entsprechenden reduzierten Zustand reduziert werden;
wobei die mindestens eine Durchflusselektrode eine Längsachse X-X` aufweist; und wobei der Elektrolyt des Schritts (b) in einer Richtung senkrecht zur Längsachse X-X fließt.

14. Verfahren zum Abgeben von Elektrizität, umfassend die folgenden Schritte:
a) Bereitstellen einer Redox-Flow-Batterie nach einem der Ansprüche 1 bis 11;
b) Fließenlassen oder Pumpen des Elektrolyten
- aus dem mindestens einen Vorratsbehälter (6, 7) in das Kompartiment (1) durch die mindestens eine Durchflusselektrode; oder
- aus dem Kompartiment (1) zum mindestens einen Vorratsbehälter (6, 7) durch die mindestens eine Durchflusselektrode;
wobei der Elektrolyt der Katholyt (4) oder der Anolyt (5) ist; und
c) Reduzieren der redoxaktiven Spezies des Katholyten an der positiven Elektrode (2) in ihren reduzierten Zustand, während die redoxaktiven Spezies des Anolyten an der negativen Elektrode (3) in den entsprechenden oxidierten Zustand oxidiert werden;
wobei die mindestens eine Durchflusselektrode eine Längsachse X-X` aufweist; und wobei der Elektrolyt des Schritts (b) in einer Richtung senkrecht zur Längsachse X-X` fließt.

15. Verwendung der Redox-Flow-Batterie (10) nach einem der Ansprüche 1 bis 11 zum Speichern und/oder Abgeben von Elektrizität.

## Revendications

1. Une batterie à flux redox (10) comprenant :
a) un compartiment (1) comprenant
- une électrode positive (2) et une électrode négative (3) ;
au moins une électrode étant une électrode à écoulement, de préférence une électrode à écoulement poreuse ;
- un catholyte (4) et un anolyte (5) ;
le catholyte (4) et l'anolyte (5) étant immiscibles entre eux ; et le catholyte et l'anolyte étant en contact par une interface liquide-liquide entre eux ; et l'interface liquide-liquide entre le catholyte et l'anolyte étant constituée du catholyte et de l'anolyte ;
b) au moins un récipient réservoir (6, 7) relié en communication fluidique avec le compartiment (1) par l'intermédiaire de ladite au moins une électrode à écoulement (2, 3) ;
ledit au moins un récipient réservoir comprend le catholyte (4) et/ou l'anolyte (5) ; ladite au moins une électrode à écoulement comprend un axe longitudinal X-X' ; et la batterie à flux redox comprend des moyens pour diriger le catholyte (4) ou l'anolyte (5) à travers ladite au moins une électrode à écoulement dans une direction perpendiculaire à l'axe longitudinal X-X'.

2. La batterie à flux redox selon la revendication 1, dans laquelle il y a un distributeur de flux (11) entre ledit au moins un récipient réservoir (6, 7) et ladite au moins une électrode à écoulement.

3. La batterie à flux redox selon l'une quelconque des revendications 1 ou 2, dans laquelle l'électrode positive (2) et l'électrode négative (3) sont des électrodes à écoulement, et/ou dans laquelle l'électrode positive (2) et l'électrode négative (3) sont en vis-à-vis ; de préférence dans laquelle l'électrode positive (2) et l'électrode négative (3) sont parallèles.

4. La batterie à flux redox selon l'une quelconque des revendications 1 à 3, dans laquelle l'électrode positive (2) et l'électrode négative (3) sont choisies parmi une matrice de carbone ou une matrice métallique ; particulièrement, sont choisies parmi le papier carbone, le feutre de carbone, le feutre de graphite, la maille métallique et/ou la mousse métallique.

5. La batterie à flux redox selon l'une quelconque des revendications 1 à 4, dans laquelle le catholyte (4) et l'anolyte (5) comprennent des espèces actives redox différentes ou identiques ; de préférence des espèces actives redox différentes, de préférence encore dans laquelle les espèces actives redox sont des couples redox organiques comprenant un groupe choisi parmi les quinones, les viologènes, les quinoxalines, les phénazines, les nitroxydes, les pyrdines, les diols et les espèces organométalliques.

6. La batterie à flux redox selon l'une quelconque des revendications 1 à 5, dans laquelle la batterie à flux redox comprend au moins une pompe (8, 9).

7. La batterie à flux redox selon l'une quelconque des revendications 1 à 6, dans laquelle la batterie à flux redox comprend des moyens pour diriger le catholyte (4) ou l'anolyte (5) dans le compartiment (1) ou hors du compartiment (1).

8. La batterie à flux redox selon l'une quelconque des revendications précédentes, dans laquelle ladite au moins une électrode à écoulement est une entrée ou une sortie du compartiment (1).

9. La batterie à flux redox selon l'une quelconque des revendications précédentes, dans laquelle au moins un récipient réservoir de catholyte (6) et un récipient réservoir d'anolyte (7) sont présents ; et dans laquelle le récipient réservoir de catholyte (6) est connecté en communication fluidique avec le compartiment (1) par l'intermédiaire de l'électrode positive (2) et dans laquelle le récipient réservoir d'anolyte (7) est connecté en communication fluidique avec le compartiment (1) par l'intermédiaire de l'électrode négative (3).

10. La batterie à flux redox selon la revendication 9, dans laquelle la batterie redox comprend au moins une pompe (8) en communication fluidique avec le récipient réservoir de catholyte (6) et avec le compartiment (1) et/ou au moins une pompe (9) en communication fluidique avec le récipient réservoir d'anolyte (7) et avec le compartiment (1).

11. La batterie à flux redox selon la revendication 10, dans laquelle les électrodes à écoulement sont des sorties du compartiment (1) et dans laquelle le compartiment (1) comprend en outre deux entrées ; de préférence, chacune des entrées est placée au centre de l'une des électrodes ; ou les électrodes à écoulement sont des entrées du compartiment (1) et le compartiment (1) comprend en outre au moins deux sorties.

12. Un système de stockage et/ou de distribution d'énergie comprenant au moins une batterie à flux redox (10) selon l'une quelconque des revendications 1 à 11.

13. Un procédé de stockage d'électricité comprenant les étapes consistant à :
a) fournir une batterie à flux redox (10) selon l'une quelconque des revendications 1 à 11 ;
b) laisser s'écouler ou pomper l'électrolyte
- depuis ledit au moins un récipient réservoir (6, 7) dans le compartiment (1) à travers ladite au moins une électrode à écoulement ; ou
- du compartiment (1) vers ledit au moins un récipient réservoir (6, 7) à travers ladite au moins une électrode à écoulement ;
l'électrolyte étant le catholyte (4) et/ou l'anolyte (5) ; et
c) oxyder les espèces redox actives du catholyte à l'électrode positive (2) à l'état oxydé correspondant, tandis que les espèces redox actives de l'anolyte sont réduites à l'état réduit correspondant à l'électrode négative (3) ;
ladite au moins une électrode à écoulement comprend un axe longitudinal X-X' ; et l'électrolyte de l'étape (b) s'écoule dans une direction perpendiculaire à l'axe longitudinal X-X.

14. Un procédé de distribution d'électricité comprenant les étapes consistant à :
a) fournir une batterie à flux redox selon l'une quelconque des revendications 1 à 11 ;
b) laisser s'écouler ou pomper l'électrolyte
- depuis ledit au moins un récipient réservoir (6, 7) vers le compartiment (1) à travers ladite au moins une électrode à écoulement ; ou
- depuis le compartiment (1) vers ledit au moins un récipient réservoir (6, 7) à travers ladite au moins une électrode à écoulement ;
l'électrolyte étant le catholyte (4) ou l'anolyte (5) ; et
c) réduire les espèces actives redox du catholyte à l'électrode positive (2) à leur état réduit tandis que les espèces actives redox de l'anolyte sont oxydées à l'état oxydé correspondant à l'électrode négative (3) ;
ladite au moins une électrode à écoulement comprend un axe longitudinal X-X' ; et l'électrolyte de l'étape (b) s'écoule dans une direction perpendiculaire à l'axe longitudinal X-X'.

15. Utilisation de la batterie à flux redox (10) selon l'une quelconque des revendications 1 à 11 pour stocker et/ou fournir de l'électricité.
